(19)

Europäisches Patentamt
European Patent Office
Office européen des brevets

(11) **EP 2 006 731 A1**

(12) **EUROPEAN PATENT APPLICATION**

(43) Date of publication:
**24.12.2008 Bulletin 2008/52**

(51) Int Cl.:
***G02F 1/13357*** *(2006.01)*   ***G02B 5/04*** *(2006.01)*

(21) Application number: **08075556.4**

(22) Date of filing: **17.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **18.06.2007 JP 2007160492**

(71) Applicant: **Sumitomo Chemical Company, Limited Tokyo 104-8260 (JP)**

(72) Inventors:
- **Ohta, Hirofumi**
  **Tsukuba-shi,**
  **Ibaraki 305-0821 (JP)**
- **Ahn, Gihwan**
  **Cheongju-si,**
  **Chungcheongbuk-do 360-171 (KR)**

(74) Representative: **Lips, Hendrik Jan George HAAGSCH OCTROOIBUREAU Breitnerlaan 146 2596 HG Den Haag (NL)**

(54) **Optical path deflecting plate, surface light source device and transmissive image display device**

(57)    An optical path deflecting plate (40) of the present invention, which is disposed separated from a plurality of light sources (30), comprises a main surface (40a) on which light from the light sources is incident, and a planar exit surface (40b) from which there exits the incident light from the light sources. The main surface comprises a plurality of prisms (60) provided in each region (41) of the main surface that corresponds to a region between two adjacent light sources. First prisms (61), among the plurality of prisms, are disposed in first (41A) and third (41C) regions of respective regions, while second prisms (62) are disposed in a second region (41B).

The first prisms change the orientation of light from the closer light source, among the two light sources, into the direction of the normal line of the exit surface, through refraction upon incidence on the first prisms, and change the orientation of light from the farther light source, among the two light sources, into the normal line direction, through total reflection in the prisms. The second prisms change the orientation of light from both light sources into the normal line direction, through total reflection in the prisms. As a result, uniform high brightness can be ensured.

EP 2 006 731 A1

**Description**

BACKGROUND OF THE INVENTION

Field of the Invention

The present invention relates to an optical path deflecting plate, a surface light source device and a transmissive image display device.

Related Background Art

Widely known transmissive image display devices include devices having a direct-type surface light source device disposed on the rear face of a transmissive image display section such as a transmissive liquid crystal cell or the like. Known such surface light source devices include devices comprising plural light sources arrayed in-plane, spaced apart from each other, and a prism member (optical path deflecting plate) which is disposed in front of the plural light sources and changes the orientation of the light from the light sources and outputting the light (Japanese Patent Application Laid-open No. H07-141908).

In the optical path deflecting plate disclosed in Japanese Patent Application Laid-open No. H07-141908, light from the closer light source among two adjacent light sources is directed towards a front side, to exit in a normal line direction. However, the exit direction of the light from the other light source is overlooked. Therefore, the light from the other light source does not necessarily exit in the normal line direction, and, as a result, it is difficult to ensure uniform high brightness.

SUMMARY OF THE INVENTION

It is thus an object of the present invention to provide an optical path deflecting plate, a surface light source device and a transmissive image display device that allow ensuring uniform high brightness.

The optical path deflecting plate of the present invention is an optical path deflecting plate disposed separated from a plurality of light sources that are arrayed spaced apart from each other, for changing an orientation of light from the plurality of light sources and outputting the light, comprising: a main surface on which light from the plurality of light sources is incident; and a planar exit surface which is disposed opposite the main surface, and from which there exits light from the plurality of light sources that is incident through the main surface; wherein the main surface comprises a plurality of prisms provided in each region of the main surface that corresponds to a region between two adjacent light sources; the each corresponding region has first to third regions in an array direction of the plurality of light sources; at least one first prism, among the plurality of prisms, is disposed at the first and third regions; at least one second prism, among the plurality of prisms, is disposed at the second region; the first prism changes the orientation of light from the light source that is closer to the first prism, among the two adjacent light sources, into a normal line direction of the exit surface, through refraction upon incidence on the first prism, and changes the orientation of light from the light source that is farther from the first prism, among the two adjacent light sources, into the normal line direction, through total reflection in the first prism; and the second prism changes the orientation of light from the two adjacent light sources into the normal line direction through total reflection in the second prism.

In the above constitution, the first to third regions in respective corresponding regions of the main surface are disposed in the order of first to third regions in the array direction. Therefore, the first region is closer to one of the two adjacent light sources, the third region is closer to the other of the two adjacent light sources, while the second region is positioned between the first and the third regions.

In the first and third regions there is provided at least one first prism among the plurality of prisms, whereby the orientation of light from the closer light source is changed into the normal line direction through refraction upon incidence on the prism, while the orientation of light for the farther light source is changed into the normal line direction through total reflection in the prism. Although the angle formed between the normal line direction and the direction of the light directed from the farther light source toward the prisms disposed in the first and third regions tends to become larger, the orientation of the light can still be changed reliably into the normal line direction thanks to total reflection, as in the above-described first prism. Also, at least one second prism, among the plurality of prisms, is disposed at the second region. Therefore, the orientation of the light of both adjacent light sources is changed into the normal line direction through internal reflection in the prisms provided in the second region. The second region is positioned between the first and third regions. Accordingly, although the angle formed between the normal line direction and the direction of the light directed from the light sources toward the prisms disposed in the second region tends to become larger, the orientation of the light from both light sources can still be changed reliably into the normal line direction thanks to total reflection in the prisms, as in the above-described second prism.

Therefore, all the light that strikes the corresponding regions, from both light sources that correspond to respective corresponding regions, exits in the normal line direction of the exit surface. The brightness of the light issuing through the exit surface is made uniform as a result Yet higher brightness can thus be realized since the light striking the corresponding regions exits thus more reliably in the normal line direction.

Preferably, first and second inclination angles, formed by the exit surface and first and second inclined surfaces constituting the first prism, are specified in such a manner that the first inclined surface refracts light from the light source that is closer to the first prism, among the two adjacent light sources, into the normal line direction, the first inclined surface refracts light from the light source that is farther from the first prism, among the two adjacent light sources, towards the second inclined surface, and the second inclined surface totally reflects the refracted light into the normal line direction; and wherein third and fourth inclination angles, formed by the exit surface and third and fourth inclined surfaces constituting the second prism, are specified in such a manner that the third inclined surface refracts light from the light source on the side of the third inclined surface, among the two adjacent light sources, towards the fourth inclined surface, the fourth inclined surface totally reflects the refracted light into the normal line direction; the fourth inclined surface refracts light from the light source on the side of the fourth inclined surface, among the two adjacent light sources, towards the third inclined surface, and the third inclined surface totally reflects the refracted light into the normal line direction.

By specifying the first and second inclination angles as described above, the orientation of the light from the closer light source, among both light sources corresponding to respective corresponding regions, is changed into the normal line direction through refraction at the first inclined surface of the first prism, while the orientation of the light from the farther light source, among the two light sources, is changed into a direction toward the second inclined surface, through refraction upon incidence of the first prism, and is then changed into the normal line direction through total reflection at the second inclined surface. The orientation of the light from both light sources is thus changed by the first prism into the normal line direction. By specifying the third and fourth inclination angles as described above, light from both light sources corresponding to respective corresponding regions, strikes the second prism via the third inclined surface and the fourth inclined surface, whereafter the orientation of the light is changed into the normal line direction through total reflection at the fourth inclined surface and the third inclined surface. The orientation of the light from both light sources is thus changed by the second prism into the normal line direction.

Preferably, the plurality of prisms provided in the corresponding region is symmetrical with respect to a plane perpendicular to the exit surface, at a central position between the two adjacent light sources.

In this case, there may be specified a prism shape for half the regions in a corresponding region, which allows shortening the time required for manufacturing the optical path deflecting plate.

Preferably, moreover, the first to third regions each have a plurality of unit regions, a plurality of the first prisms of identical cross-sectional shape is provided at each of the plurality of unit regions of the first and third regions, and a plurality of the second prisms of identical cross-sectional shape is provided at each of the plurality of unit regions of the second region.

In this case, a plurality of first prisms of identical cross-sectional shape is respectively provided in each unit region of the first and third regions, while a plurality of second prisms of identical cross-sectional shape is provided in each unit region of the second region. This allows manufacturing the prisms in each unit region under identical conditions, and allows changing light orientation in more prisms. Hence, the orientation of the light can be aligned in the normal line direction more easily.

The surface light source device according to the present invention comprises a plurality of light sources arrayed spaced apart from each other, and the above-described optical path deflecting plate according to the invention, disposed separated from the plurality of light sources.

In this case, light outputted by each of the light sources passes through the optical path deflecting plate and exits through the exit surface of the optical path deflecting plate. Thereupon, when light from two adjacent light sources among the plural light sources strikes corresponding regions of the optical path deflecting plate that correspond to the two light sources, the light is outputted in the normal line direction of the exit surface, as described above. The above surface light source device, therefore, allows outputting uniform high-brightness light.

Further, the transmissive image display device according to the present invention comprises the above-described surface light source device according to the present invention and a transmissive image display section disposed separated from the surface light source device, relative to an exit direction of light from the surface light source device.

In such a transmissive image display device, thus, uniform high-brightness light outputted from the above-described surface light source device strikes the transmissive image display section. As a result, the transmissive image display section can display sharper images of uniform brightness.

The above-described optical path deflecting plate according to the present invention allows outputting together light from two adjacent light sources in the normal line direction of an exit surface, and can thus ensure more uniform high brightness. By way of the optical path deflecting plate, the surface light source device according to the present invention allows outputting together light from two adjacent light sources in the normal line direction of an exit surface, and allows hence outputting more uniform high-brightness light. By way of the surface light source device, furthermore, the transmissive image display device according to the present invention allows more uniform high-brightness light to strike a transmissive image display section, and allows hence displaying sharper images, of uniform brightness, on the transmissive image display section.

BRIEF DESCRIPTION OF THE DRAWINGS

Fig. 1 is a cross-sectional diagram illustrating schematically an embodiment of a transmissive image display device according to the present invention;

Fig. 2 is a schematic diagram of an enlarged portion of an optical path deflecting plate;

Fig. 3 is a schematic diagram of an example of a prism disposed in a first region;

Fig. 4 is a schematic diagram of an example of a prism disposed in a third region;

Fig. 5 is a schematic diagram of an example of a prism disposed in a second region;

Fig. 6 is a diagram illustrating an optical path deflecting plate model for explaining a method for specifying inclination angles;

Fig. 7 is a diagram illustrating an optical path deflecting plate model for explaining part of a method for specifying inclination angles;

Fig. 8 is a diagram illustrating an optical path deflecting plate model for explaining part of a method for specifying inclination angles;

Fig. 9 is a diagram illustrating an optical path deflecting plate model for explaining part of a method for specifying inclination angles;

Fig. 10 is a schematic diagram of an enlarged portion of an optical path deflecting plate of a first example;

Fig. 11 is a schematic diagram of a further enlarged portion of the optical path deflecting plate illustrated in Fig. 10; and

Fig. 12 is a schematic diagram of an enlarged portion of an optical path deflecting plate of a second example.

DESCRIPTION OF THE PREFERRED EMBODIMENTS

An embodiment of the optical path deflecting plate, surface light source device and transmissive image display device of the present invention is explained below with reference to accompanying drawings. In the drawings, identical elements are denoted with identical reference numerals, and recurrent explanations thereof are omitted. Also, the dimensional ratios in the drawings do not necessarily match those in the explanation.

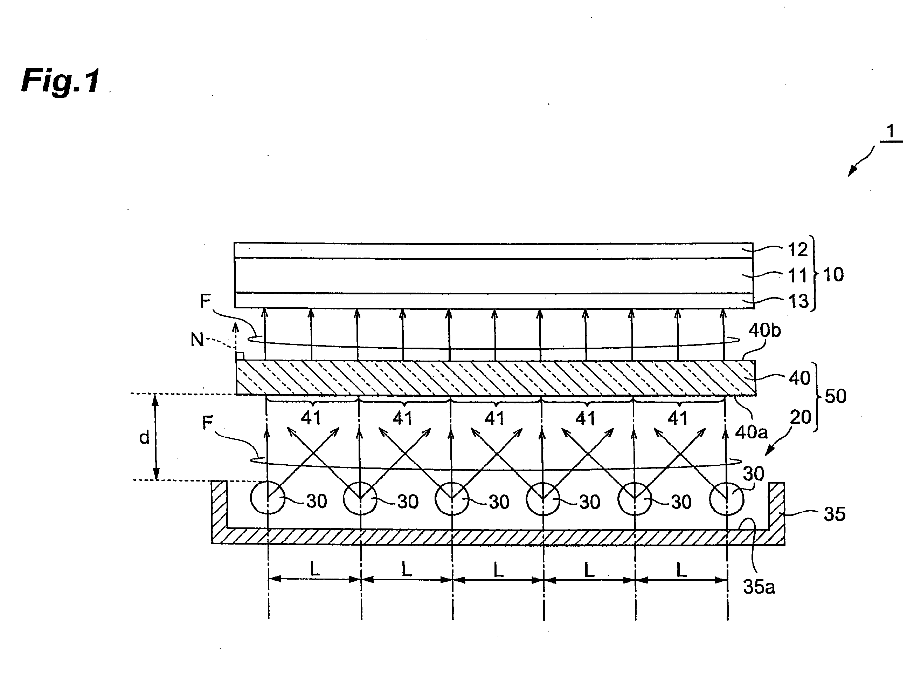

Fig. 1 is a cross-sectional diagram illustrating schematically an embodiment of a transmissive image display device according to the present invention. A transmissive image display device 1 is a liquid crystal display device that comprises a transmissive image display section 10, in which polarizing plates 12, 13 are layered on the top and bottom faces of a liquid crystal cell 11, and a surface light source device 50 provided at the back of (below) the transmissive image display section 10.

As the liquid crystal cell 11 and the polarizing plates 12, 13 there can be used liquid crystal cells and polarizing plates that are employed in transmissive image display devices such as conventional liquid crystal display devices and the like. Examples of the liquid crystal cell 11 include, for instance, 90° twist TN liquid crystal display elements. The pair of polarizing plates 12, 13 at the top and bottom is disposed in such a manner that the respective transmission axes thereof are mutually perpendicular. The transmission axes of the polarizing plates 12, 13 are disposed so as to be parallel to the orientation direction of the liquid crystal molecules in the liquid crystal cell 11.

The surface light source device 50 has a light source section 20 and an optical path deflecting plate 40 disposed at the front of (above, in Fig. 1) the light source section 20, i.e. separated from the light source section 20 on the side of the transmissive image display section 10.

The light source section 20 has plural light sources 30 equidistantly disposed, with a spacing L, and positioned coplanarly with the central axis lines of the light sources 30. The spacing L between central axis lines of adjacent light sources 30, 30 is, for instance, 15 mm to 150 mm. The light sources 30 are rod-like light sources extending in a direction perpendicular to the array direction of the plural light sources 30. The light sources 30 are, for instance, a straight tube-like light source, such as a fluorescent light (cold cathode ray tube) or the like. Although the light sources 30 have herein a rod-like shape, a point light source such as an LED or the like may also be used.

As illustrated in Fig. 1, the plural light sources 30 are preferably disposed in a lamp box 35. An inner face 35a of the lamp box 35 is preferably formed as a light reflective surface. Light F outputted from the light sources 30 is outputted reliably thereby toward the transmissive image display section 10, so that light F from the light sources 30 can be utilized efficiently.

The optical path deflecting plate 40 has a rear surface (main surface) 40a positioned on the side of the light source section 20, and a planar exit surface 40b disposed opposite the rear surface 40a. The optical path deflecting plate 40 is disposed so as to cover all the light sources 30. The distance d between the light sources 30 and the optical path deflecting plate 40 is, for instance, 5 mm to 50 mm. The distance d is the distance between the top of the light sources 30 and the rear surface 40a, as illustrated in Fig. 1. The thickness of the optical path deflecting plate 40 is for instance 0.1 mm to 15 mm, preferably 0.5 mm to 10 mm, and more preferably 1 mm to 5 mm.

The optical path deflecting plate 40 comprises a transparent material, for instance a transparent resin and/or a transparent glass. Examples of transparent resins include, for instance, polycarbonate resins, ABS resins (acrylonitrile-butadiene-styrene copolymer resins), methacrylic resins, MS resins (methyl methacrylate-styrene copolymer resins), polystyrene resins, AS resins (acrylonitrile-styrene copolymer resins), as well as polyolefin resins such as polyethylene, polypropylene or the like.

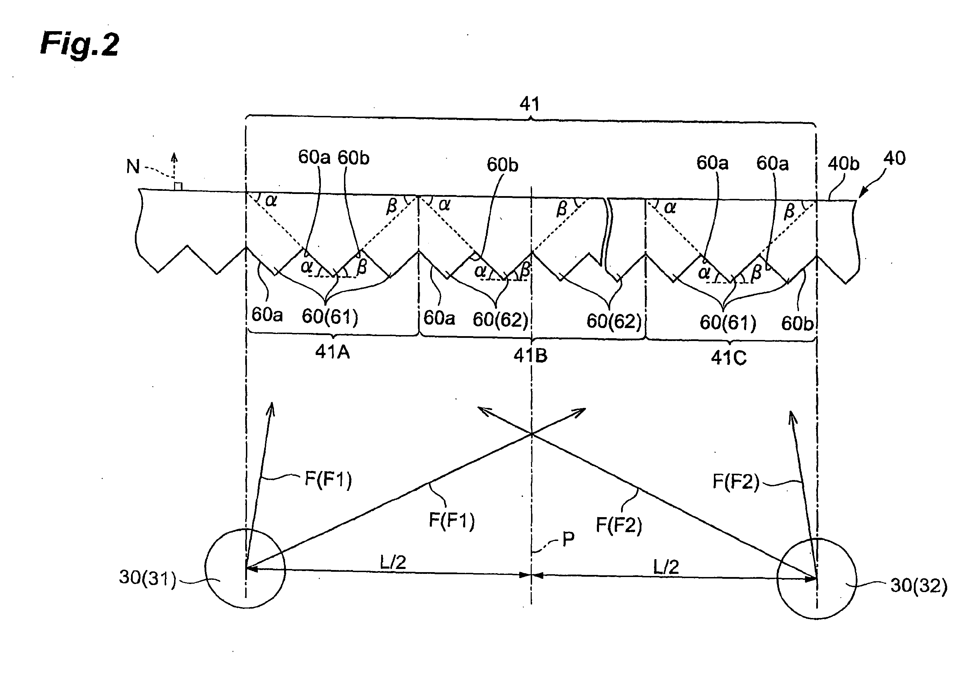

As illustrated in Fig. 2, a plurality of prisms 60 of triangular cross section are formed on the rear surface 40a of the optical path deflecting plate 40, at each corresponding region 41 that is a region positioned above two adjacent light sources 30, 30, between the latter, and corresponding to a region between two light sources 30, 30. In the present embodiment, the plural prisms 60 formed on the corresponding regions 41 have mirror symmetry (left-right symmetry in Fig. 2) relative to a central position between both light sources 30, 30, i.e. relative to a hypothetical plane P that is perpendicular to the exit surface 40b at a position L/2 from a light source 31 to a light source 32.

Fig. 2 is a schematic diagram of an enlarged portion of the optical path deflecting plate. Fig. 2 illustrates as well two light sources 30, 30. To differentiate the two light sources 30, 30, the latter will be referred to hereafter as light sources 31, 32, with light F1 denoting light F outputted by the light source 31 and light F2 denoting light F outputted by the light source 32.

As illustrated in Fig. 2, the plural prisms 60 are formed in such a manner that the prism apexes thereof are positioned on a same plane. As illustrated in Fig. 2, each prism 60 is configured in such a manner that the orientations of light F1 and F2 from the two light sources 31, 32 are changed into the direction of the normal line N of the exit surface 40b by specifying the inclination angles $\alpha$, $\beta$ by which two inclined surfaces 60a, 60b of the prism 60 are tilted relative to the exit surface 40b.

The prisms 60 include first-type prisms (first prisms) 61, and second-type prisms (second prisms) 62. The second-type prisms 62 are disposed at a region that includes the central position of the corresponding regions 41, while the first-type prisms 61 are disposed at regions on both sides of the region at which the second-type prisms 62 are disposed. Therefore, the corresponding regions 41 have first and third regions 41A, 41C, in which plural first-type prisms 61 are disposed, and a second region 41B, flanked by the first and third regions 41A, 41C, in which second-type prisms 62 are disposed.

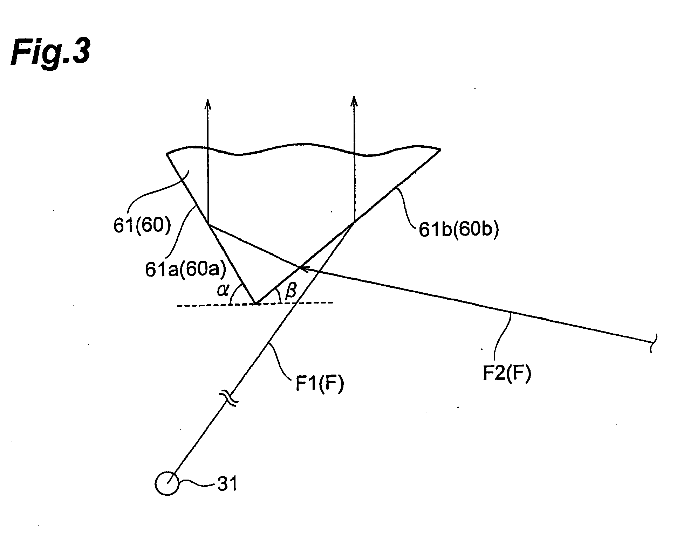

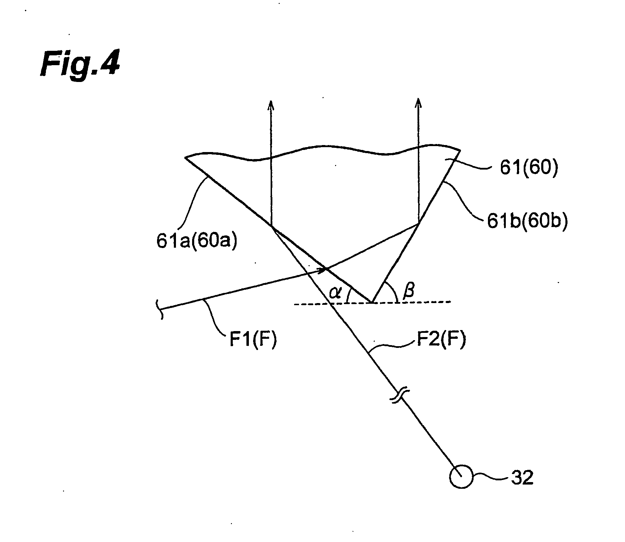

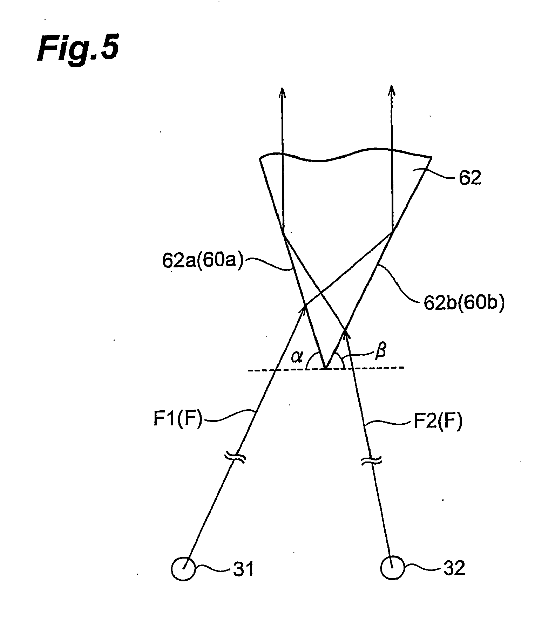

The prisms 61, 62 of the respective types are explained next with reference to Figs. 3 to 5. Fig. 3 is a schematic diagram of an example of a prism disposed in a first region. Fig. 4 is a schematic diagram of an example of a prism disposed in the third region. Fig. 5 is a schematic diagram of an example of a second prism.

As illustrated in Figs. 3 and 4, a first prism 61 is configured in such a manner so as to change the orientation of light from the closest light source, among the lights F1 and F2 from two light sources 31, 32, into the direction of the normal line N, through refraction at one of the inclined surfaces among the two inclined surfaces 61a, 61b of the prism 61, and so as to change the orientation of light F from the other light source into the direction of the normal line N, through total reflection inside the prism 61. That is, total reflection takes place only at one of the two inclined surfaces 61a, 61b of the prism 61. A detailed explanation follows next on instances where the prism 61 is respectively disposed in the first and third regions 41A, 41C.

When the prism 61 is disposed in the first region 41A, the prism 61 refracts light F1 from the light source 31, among both light sources 31, 32, at the inclined surface (first inclined surface) 61b of the prism 61, changing thereby the orientation of light F1 into the direction of the normal line N, and refracts light F2 from the light source 32 at the inclined surface 61b, towards the inclined surface (second inclined surface) 61a (60a), so that the refracted light is totally reflected thereafter at the inclined surface 61a, changing thereby the orientation of light F2 into the direction of the normal line N, as illustrated in Fig. 3.

When the prism 61 is disposed in the third region 41C, the prism 61 refracts light F2 from the light source 32, among both light sources 31, 32, at the inclined surface (first inclined surface) 61a of the prism 61, changing thereby the orientation of light F2 into the direction of the normal line N, and refracts light F1 from the light source 31. at the inclined surface 61a, towards the inclined surface (second inclined surface) 61b, so that the refracted light is totally reflected thereafter at the inclined surface 61b, changing thereby the orientation of light F1 into the direction of the normal line N, as illustrated in Fig. 4.

The second-type prisms 62, as illustrated in Fig. 5, refract light F1 from the light source 31 at an inclined surface (third inclined surface) 62a, directing light F1 toward an inclined surface (fourth inclined surface) 62b at which light F1 is totally reflected, changing thereby the orientation of light F1 into the direction of the normal line N; and refract light F2 from the light source 32 at the inclined surface 62b, towards the inclined surface 62a, so that the refracted light is totally reflected thereafter at the inclined surface 62a, changing thereby the orientation of light F2 into the direction of the normal line N. Total reflection takes place as a result on the two inclined surfaces 62a, 62b constituting the prism 62.

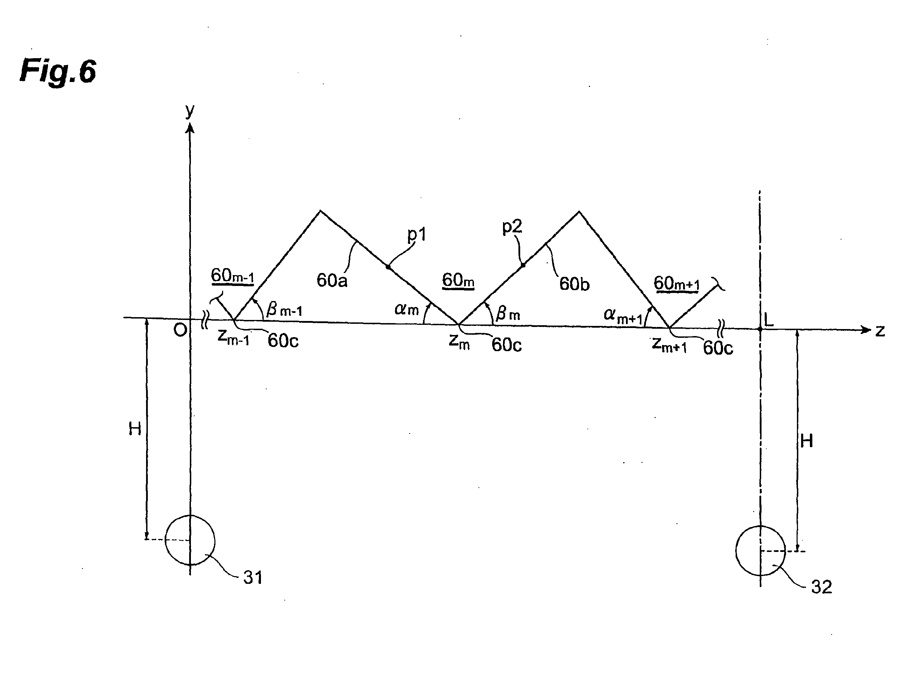

As explained above, the shape of the plural prisms 60, that include the prisms 61 and the prisms 62 of two types, is determined by specifying the inclination angles α, β of the two inclined surfaces 60a, 60b constituting each prism 60. An example of a method for specifying the inclination angles α, β is explained next with reference to Figs. 6 to 9.

Fig. 6 is a diagram illustrating an optical path deflecting plate model for explaining a method for specifying the inclination angles α, β.

As illustrated in Fig. 6, a z-axis is defined by a straight line joining plural prism apexes 60c, a y-axis corresponds to the axis of the direction of the normal line N passing through the center of the light source 31, and an origin O is the point at which the z-axis and the y-axis intersect each other. Also, n denotes the refractive index of the optical path deflecting plate 40, and H denotes the distance from the origin O to the center of the light source 31. A prism $60_m$ (m is an integer equal to or greater than 1) is the prism 60 whose inclination angles α, β are to be specified. Prisms $60_{m-1}$, $60_{m+1}$ are thus the prisms on the two sides of the prism 60. The inclination angles α, β and the positions on the z-axis of the prism apexes of the prisms $60_m$, $60_{m-1}$, $60_{m+1}$ are differentiated by means of the subindices m, m-1, m+1 corresponding to respective prisms $60_m$, $60_{m-1}$, $60_{m+1}$, as illustrated in Fig. 6. Also, the inclination angle α has a positive direction in the clockwise direction while the inclination angle β has a positive direction in the counterclockwise direction as illustrated in Fig. 6.

The center points p1, p2 of the inclined surfaces 60a, 60b of the prism $60_m$ correspond to the positions at which the orientations of the lights F1, F2 from the light sources 31, 32 are ultimately changed into the direction of the normal line N. The point p1, of coordinates $(z1_m, y1_m)$, and the point p2, of coordinates $(z2_m, y2_m)$, are represented by equations (1) and (2) below.

[Equation 1]

$$\left(z1_m, y1_m\right) = \left(\frac{1}{2}\frac{\left(z_{m-1}+z_m\right)\tan\beta_{m-1}+2z_m\tan\alpha_m}{\tan\beta_{m-1}+\tan\alpha_m}, \frac{1}{2}\frac{\left(z_m-z_{m-1}\right)\tan\beta_{m-1}\tan\alpha_m}{\tan\beta_{m-1}+\tan\alpha_m}\right)\cdots(1)$$

[Equation 2]

$$\left(z2_m, y2_m\right) = \left(\frac{1}{2}\frac{2z_m\tan\beta_m+\left(z_m+z_{m+1}\right)\tan\alpha_{m+1}}{\tan\beta_m+\tan\alpha_m}, \frac{1}{2}\frac{\left(z_{m+1}-z_m\right)\tan\beta_m\tan\alpha_{m+1}}{\tan\beta_m+\tan\alpha_{m+1}}\right)\cdots(2)$$

The conditions that the inclination angles $\alpha_m$, $\beta_m$ must satisfy when the prism $60_m$ is a first-type prism 61 or a second-type prism 62 are represented by a combination of refractive index conditions and total reflection conditions for three cases, as follows.

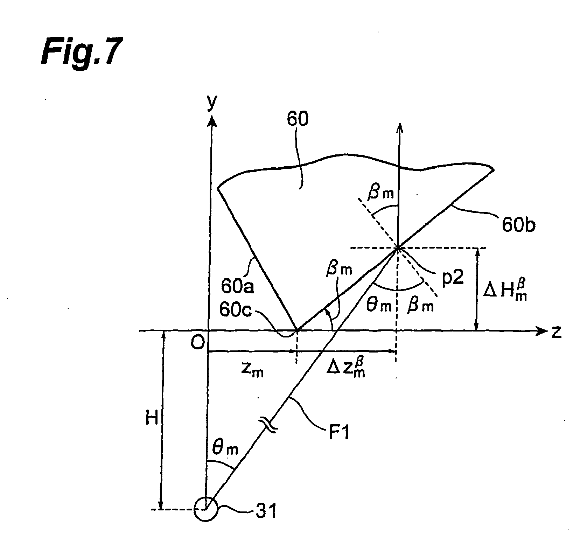

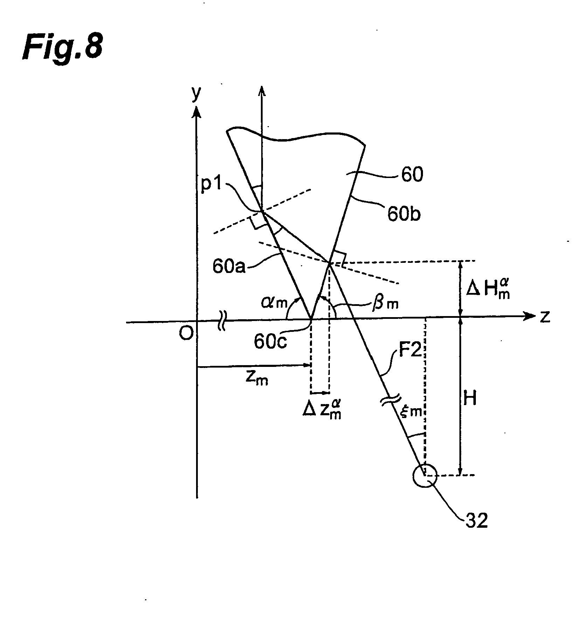

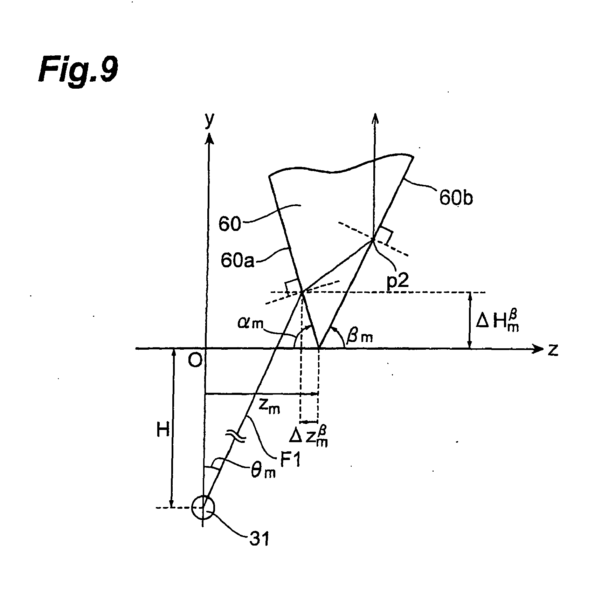

(i) Change of the orientation of light F1 from the light source 31 into the direction of the normal line N, through refraction accompanying incidence on the prism 60, as illustrated in Fig. 7;
(ii) Change of the orientation of light F2 from the light source 32 into the direction of the normal line N, through total reflection at the inclined surface 60a, as illustrated in Fig. 8; and
(iii) Change of the orientation of light F1 from the light source 31 into the direction of the normal line N, through total reflection at the inclined surface 60b, as illustrated in Fig. 9.

Figs. 7 to 9 are diagrams for explaining a method for specifying inclination angles $\alpha_m$, $\beta_m$ in accordance with a method of modifying the optical paths of light F1 or light F2, by way of the prism $60_m$, for each of the cases (i) to (iii) above. The case in which the direction of light F1 from the light source 31, as illustrated in Fig. 7, is changed into the direction of the normal line N through refraction at the inclined surface 60b corresponds to a case where the prisms 61 are provided in the first region 41A. A case where the prisms 61 are disposed in the third region 41C is described later.

The necessary conditions for achieving (i) above are given by equations (3) to (6) below, wherein $\theta_m$ denotes the angle formed between the y-axis and light F1 incident on the prism $60_m$, as illustrated in Fig. 7.

[Equation 3]

$$\sin(\beta_m + \theta_m) = n \cdot \sin\beta_m \cdots (3)$$

[Equation 4]

$$\tan\theta_m = \frac{z_m + \Delta z_m^\beta}{H + \Delta H_m^\beta} \cdots (4)$$

[Equation 5]

$$\Delta z_m^\beta = \frac{1}{2} \cdot \frac{(z_{m+1} - z_m)\tan\alpha_{m+1}}{\tan\beta_m + \tan\alpha_{m+1}} \cdots (5)$$

[Equation 6]

$$\Delta H_m^\beta = \Delta z_m^\beta \tan\beta_m \cdots (6)$$

The terms $\Delta z_m^\beta$, $\Delta H_m^\beta$ are correction terms for correcting, relative to the z-axis direction and the y-axis direction, the offset between the incidence position of light F 1 and the position of the prism apex 60c that results from taking, as the position of the point p2, the position at which the orientation of light F1 is ultimately changed into the direction of the normal line N, as illustrated in Fig. 7.

The necessary conditions for achieving (ii) above are given by equations (7) to (10) below, wherein $\theta_m$ is defined as in (i), and $\xi_m$ denotes the angle formed between the direction of the normal line N (y-axis direction) and light F2 from the light source 32 that strikes the prism $60_m$.

[Equation 7]

$$\sin(\beta_m - \xi_m) = n\sin(2\alpha_m + \beta_m - \pi) \cdots (7)$$

[Equation 8]

$$\tan\xi_m = \frac{L - z_m - \Delta z_m^\alpha}{H + \Delta H_m^\alpha} \cdots (8)$$

[Equation 9]

$$\Delta z_m^{\alpha} = \frac{(z_m - z1_m)\tan(2\alpha_m - 0.5\pi) + y1_m}{\tan\beta_m + \tan(2\alpha_m - 0.5\pi)} \cdots(9)$$

[Equation 10]

$$\Delta H_m^{\alpha} = \Delta z_m^{\alpha} \tan\beta_m \cdots(10)$$

The terms $\Delta z^{\alpha}_m$, $\Delta H^{\alpha}_m$ that appear in equations (9) and (10) are correction terms for correcting, relative to the z-axis direction and the y-axis direction, the offset between the position of the prism apex 60c and the incidence position of light F2 on the prism $60_m$ that results from ultimately changing the orientation of light F2 into the direction of the normal line N at the position of the point p1, as illustrated in Fig. 8.

Further, the necessary conditions for achieving (iii) above are given by equations (11) to (14) below, wherein $\theta_m$ and $\xi_m$ are defined as in (i), (ii).

[Equation 11]

$$\sin(\alpha_m - \theta_m) = n\sin(\alpha_m + 2\beta_m - \pi)\cdots(11)$$

[Equation 12]

$$\tan\theta_m = \frac{z_m + \Delta z_m^{\beta}}{H + \Delta H_m^{\beta}} \cdots(12)$$

[Equation 13]

$$\Delta z_m^{\beta} = -\frac{(z_m - z2_m)\tan(2\beta_m - 0.5\pi) + y2_m}{\tan\alpha_m + \tan(2\beta_m - 0.5\pi)} \cdots(13)$$

[Equation 14]

$$\Delta H_m^{\beta} = -\Delta z_m^{\beta} \tan\alpha_m \cdots(14)$$

The terms $\Delta z^{\beta}_m$, $\Delta H^{\beta}_m$ are correction terms for correcting, relative to the z-axis direction and the y-axis direction, the offset between the incidence position of light F1 on the prism 60 and the position of the prism apex 60c that results from ultimately changing the orientation of light F1 into the direction of the normal line N at the position of the point p2, as illustrated in Fig. 9. The term $\Delta z^{\beta}_m$ is positive in the direction of the arrow denoted by a broken line in Fig. 9, i.e. in the negative direction of the z-axis.

As illustrated in Fig. 3, the change in orientation of light F1 and light F2 effected by the prisms 61 disposed in the first region 41A can be realized by combining the instances of Fig. 7 and Fig. 8. Accordingly, the inclination angle

(second inclination angle) $\alpha_m$, and the inclination angle (first inclination angle) $\beta_m$, for the case where the prism $60_m$ is a prism 61 in the first region 41A, are specified so as to satisfy simultaneously equations (3) to (6) and equations (7) to (10).

Furthermore, as illustrated in Fig. 5, the change in orientation of light F1 and light F2 effected by the prisms 62 disposed in the second region 41B can be realized by combining the instances of Fig. 8 and Fig. 9. Accordingly, the inclination angle (third inclination angle) $\alpha_m$, and the inclination angle (fourth inclination angle) $\beta_m$, for the case where the prism $60_m$ is a prism 62, are specified so as to satisfy simultaneously equations (7) to (10) and equations (11) to (14).

The third region 41C is a mirror image of the first region 41A, and hence the values of the inclination angles $\alpha_m$, $\beta_m$ are herein the reverse of those specified for the prisms 61 disposed in the first region 41A. That is, the inclination angle (first inclination angle) $\alpha_m$, and the inclination angle (second inclination angle) $\beta_m$ of each prism 61 positioned at the third region 41C are the inclination angle $\beta$ and the inclination angle $\alpha$ of the corresponding prism 61 in the first region 41A.

The boundary position between the first and second regions 41A, 41B, or the boundary position between the second and third regions 41B, 41C are determined in such a manner that the local brightness angular distributions of light issuing from the exit surface 40b are connected as smoothly as possible.

The above inclination angles $\alpha$, $\beta$ of the prisms 60 (61 or 62) respectively disposed in the first to third regions 41A to 41C, are preferably calculated up to half the regions (i.e. regions up to z=L/2) in the z-axis direction of the corresponding region 41, using reverse values of the inclination angles $\alpha$, $\beta$, as the respective $\alpha$, $\beta$ values of the regions in the remaining half, since doing so allows omitting part of the calculation. The inclination angles $\alpha$, $\beta$ calculated using the above equations (3) to (14) can accommodate a given error tolerance, for instance about $\pm 3°$.

In the manufacture of the optical path deflecting plate 40, the inclination angles $\alpha$, $\beta$ of respective prisms 60 to be formed on the corresponding regions 41 are calculated using equations (3) to (14). The optical path deflecting plate 40 may be obtained by forming prisms 60, having the calculated inclination angles $\alpha$, $\beta$, by preparing a plate-like body comprising a transparent material, the front and reverse faces of which are both planar, and by milling predetermined positions on the reverse face, for instance by way of a micromachining technology.

In the surface light source device 50 using the optical path deflecting plate 40 having the above constitution, light F 1 and light F2 outputted from two adjacent light sources 31, 32, among a plurality of light sources 30, are mainly incident on corresponding regions 41 at a position between two adjacent light sources 31, 32, above the latter.

Each corresponding region 41 is formed by a plurality of prisms 60. Also, a plurality of first-type prisms 61, among a plurality of prisms 60, is formed on the first and third regions 41A,41C of the each corresponding region 41, and a plurality second-type prisms 62 is formed on the second region 41B.

The first- and second-type prisms 61, 62 are configured in such a manner that light F1 and light F2 from the light sources 31, 32 exit both in the direction of the normal line N. Hence, light F exits from the optical path deflecting plate 40 oriented in the direction of the normal line N, across the entire exit surface 40b. The brightness of light F issuing from the optical path deflecting plate 40, i.e. light F issuing from the surface light source device 50, becomes uniform as a result. Brightness increases because there is less light issuing at a tilt relative to the direction of the normal line N.

Ordinarily, the angle formed between the direction of the normal line N and the direction of light F from the light sources 30 directed at the prisms 60 increases as does the distance that separates the light sources 30 and the prisms 60 formed on the rear surface 40a of the optical path deflecting plate 40, in the direction perpendicular to the direction of the normal line N, which as a result makes it more difficult to change the orientation of light F into the direction of the normal line N by refraction upon incidence on the prisms 60.

In the optical path deflecting plate 40 of the present embodiment, by contrast, the orientation of light F (F1 or F2) from a close light source 30 (31 or 32) is changed into the direction of the normal line N through refraction upon incidence of light F at the prisms 61 disposed in the closer first and third regions 41A, 41C directly above the light sources 31, 32, while light F (F2 or F1) from a distant light source 30 (32 or 31) is changed into the direction of the normal line N through total refraction in the prisms 61. The prisms 62 disposed in the second region 41B changes the directions of light F1, F2 from the light sources 31, 32 into the direction of the normal line N, through total reflection in the prisms 62. In the optical path deflecting plate 40, therefore, the orientation of light F from each light source 30 can be reliably changed into the direction of the normal line N. As a result, uniform high-brightness light F can issue, as described above, from the optical path deflecting plate 40 used in the surface light source device 50.

In the transmissive image display device 1, which is configured in such a manner that light F from the surface light source device 50 is incident on the transmissive image display section 10 as illustrated in Fig. 1, uniform high-brightness light F strikes thus the transmissive image display section 10, making it possible to display sharper images, of uniform brightness, across an entire screen.

In the explanation thus far, the trough portions between two adjacent prisms 60, 60 are located directly above the light sources 30 (31, 32), as illustrated in Fig. 2. However, the shapes located directly above the light sources 30 may be, for instance, planar. Also, the prism apexes 60c may be positioned directly above the light sources 30. In case of a planar shape, the above first- and second-type prisms 61, 62 may be disposed in the same way at regions of the corresponding regions 41 excluding planar regions directly above the light sources. In terms of achieving more uniform brightness, the optical path deflecting plate 40 has preferably dispersed therein a diffusive material. The light sources 30, moreover, have ordinarily a certain width. When positioning the corresponding regions 41 at regions between adjacent light sources 30, 30, therefore, the corresponding regions 41 are not limited to being positioned between the central axis lines of adjacent light sources 30, 30, as described above, but may also be offset to the left or right of the regions between the central axis lines, such that the width of the corresponding regions 41 need not match the length between central axis lines. The plural prisms 60 provided in the corresponding regions 41 are symmetrical with respect to the plane P illustrated in Fig. 2. Herein, if the first- and second-type prisms 61, 62 are disposed in the above-described positional relationship, the number of prisms and the like may differ on both sides of the plane P.

The optical path deflecting plate is explained next by way of example.

(First example)

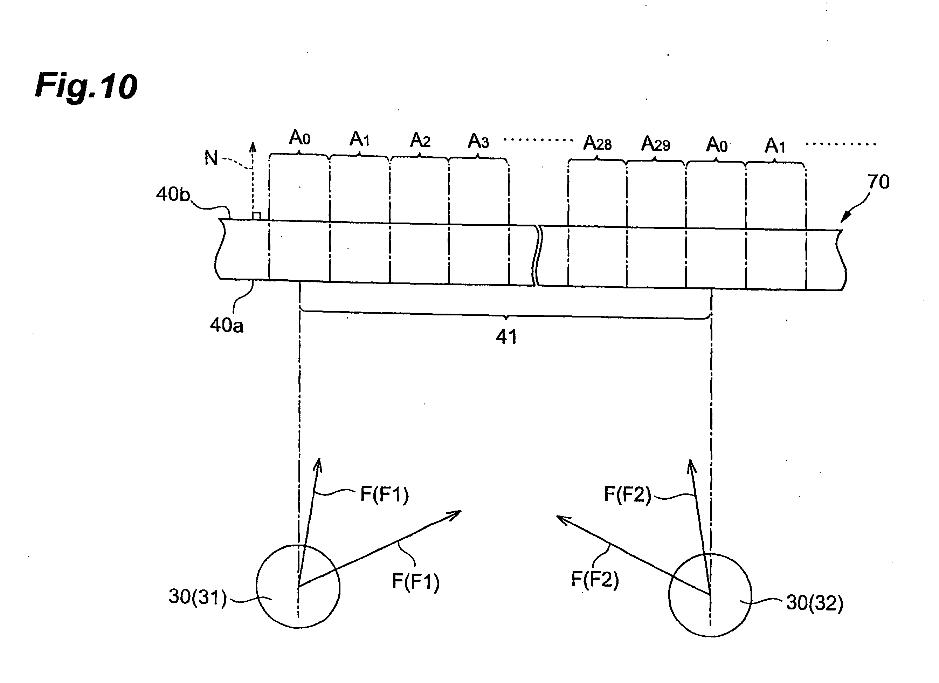

Fig. 10 is a schematic diagram illustrating the constitution of an optical path deflecting plate of a first example. An optical path deflecting plate 70 is used in the surface light source device 50 in place of the optical path deflecting plate 40 illustrated in Fig. 1. Fig. 10 illustrates an enlarged portion of the optical path deflecting plate 70 of the first example. Fig. 10 illustrates also two adjacent light sources 30, 30, among the plural light sources 30 of the surface light source device 50. In the present example, the plural light sources 30 in the surface light source device 50 are all fluorescent lamps. The spacing L between two adjacent light sources 30, 30, among the plural light sources 30, is 30 mm. As was the case in the above-described embodiment, to differentiate the two light sources 30, 30, the latter will be referred to as light sources 31, 32 in the explanation that follows.

The optical path deflecting plate 70 differs mainly from the optical path deflecting plate 40 illustrated in Fig. 1 in that now the rear surface 40a opposing the light sources 31, 32 has regions $A_0$ that include the positions directly above the light sources 31, 32, and 29 regions (unit regions) $A_1$ to $A_{29}$ between the region $A_0$ directly above the light source 31 and the region $A_0$ directly above the light source 32. The optical path deflecting plate 70 is explained next focusing on this difference.

The optical path deflecting plate 70 comprises a transparent resin having a refractive index of 1.57. The thickness of the optical path deflecting plate 70 is 2 mm. The surface of exit surface 40b of the optical path deflecting plate 70, i.e. the surface on the front side, is planar all over.

The regions $A_0$ to $A_{29}$ on the rear surface 40a of the optical path deflecting plate 70 each have a width of 1000 $\mu$m. The centers in the width-direction of each region $A_0$ are positioned directly above the center axis lines of the corresponding light sources 31, 32. The corresponding region 41 in the optical path deflecting plate 70, therefore, comprises half the region $A_0$, on the side of the region $A_1$, above the light source 31, regions $A_1$ to $A_{29}$, and half the region $A_0$, on the side of the region $A_{29}$, above the light source 32. The corresponding region 41 is explained herein as the region between the center axis lines of the light sources 31, 32. The latter have a width of their own, and hence the region comprising the region $A_0$ to the region $A_{29}$ can be considered as the corresponding region 41. Such being the case, the corresponding region 41 can be divided into 30 regions.

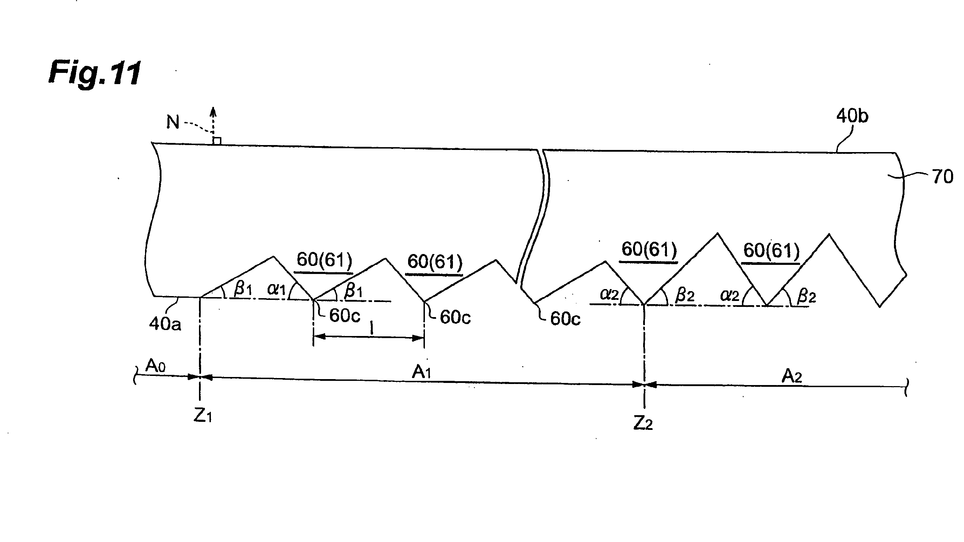

As illustrated in Fig. 11, the region $A_0$ of the rear surface 40a has a planar surface. On each of the regions $A_1$ to $A_{29}$ of the rear surface 40a there are formed 20 prisms 60. The spacing between adjacent prisms 60, i.e. the distance 1 between prism apexes 60c, is 50 $\mu$m. The distance H between the light sources 31, 32 and the optical path deflecting plate 70 is 20 mm.

The 20 prisms 60 within each region $A_1$ to $A_{29}$ have identical cross-sectional shape. That is, the inclination angles $\alpha$, $\beta$ of the inclined surfaces 60a, 60b of each prism 60, within a respective region $A_1$ to $A_{29}$, are identical. As illustrated in Fig. 11, the boundaries of the regions $A_1$ to $A_{29}$ are positioned at the prism apexes 60c, and hence a prism 60 having the prism apex 60c at a boundary position straddles two adjacent regions $A_i$, $A_{i+1}$. Herein, the prism 60 at the boundary position is counted as belonging to the region farther from the light source 31, i.e. the region $A_{i+1}$.

The inclination angles $\alpha_m$, $\beta_m$ formed by the exit surface 40b and the two inclined surfaces 60a, 60b constituting the prisms 60 within each region $A_1$ to $A_{29}$, are calculated by combining equations (3) to (14). In a case where prisms 60 having identical cross-sectional shape are disposed within each region $A_i$, as in the present example, $Z_m$ is calculated as the boundary position $Z_i$ of two adjacent regions $A_{i-1}$, $A_i$ (i is any integer from 1 to 29). The results of the calculation are as given in Table 1.

[Table 1]

| m | $Z_m$(mm) | $\alpha_m$(°) | $\beta_m$(°) | m | $z_m$(mm) | $\alpha_m$(°) | $\beta_m$(°) |
|---|---|---|---|---|---|---|---|
| 1 | 0.5 | 72.8 | 4.9 | 16 | 15.5 | 66.5 | 65.8 |
| 2 | 1.5 | 71.8 | 9.6 | 17 | 16.5 | 67.2 | 65.2 |
| 3 | 2.5 | 71.0 | 14.0 | 18 | 17.5 | 67.9 | 64.5 |
| 4 | 3.5 | 70.3 | 18.0 | 19 | 18.5 | 68.6 | 63.9 |

(continued)

| m | $Z_m$(mm) | $\alpha_m$(°) | $\beta_m$(°) | m | $z_m$(mm) | $\alpha_m$(°) | $\beta_m$(°) |
|---|---|---|---|---|---|---|---|
| 5 | 4.5 | 69.9 | 21.6 | 20 | 19.5 | 69.4 | 63.3 |
| 6 | 5.5 | 69.6 | 73.3 | 21 | 20.5 | 70.4 | 62.7 |
| 7 | 6.5 | 61.1 | 72.5 | 22 | 21.5 | 70.9 | 62.1 |
| 8 | 7.5 | 61.6 | 71.7 | 23 | 22.5 | 71.7 | 61.6 |
| 9 | 8.5 | 62.1 | 70.9 | 24 | 23.5 | 72.5 | 61.1 |
| 10 | 9.5 | 62.7 | 70.1 | 25 | 24.5 | 73.3 | 69.6 |
| 11 | 10.5 | 63.3 | 69.4 | 26 | 25.5 | 21.6 | 69.9 |
| 12 | 11.5 | 63.9 | 68.6 | 27 | 26.5 | 18.0 | 70.3 |
| 13 | 12.5 | 64.5 | 67.9 | 28 | 27.5 | 14.0 | 71.0 |
| 14 | 13.5 | 65.2 | 67.2 | 29 | 28.5 | 9.6 | 71.8 |
| 15 | 14.5 | 65.8 | 66.5 | 30 | 29.5 | 4.9 | 72.8 |

The calculation results listed in Table 1 are obtained using equations (3) to (6) and equations (7) to (10) for m=1 to 5, and equations (7) to (10) and equations (11) to (14) for m=6 to 15. The $\alpha_m$, $\beta_m$ values from m = 16 upwards are the reverse values of the $\alpha$, $\beta$ values obtained in the calculation results up to m=15.

Consequently, the prisms 60 having $\alpha_m$, $\beta_m$ for m=1 to 5 as the inclination angles are first-type prisms 61 positioned at a first region. In this case, the region comprising regions $A_1$ to $A_5$ is the first region 41A. The prisms 60 having $\alpha_m$, $\beta_m$ for m=6 to 25 as the inclination angles are second-type prisms 62 positioned at a second region 41B. In this case, the region comprising regions $A_6$ to $A_{25}$ is the second region 41B. The prisms 60 having $\alpha_m$, $\beta_m$ for m=26 to 29 as the inclination angles are first-type prisms 61 positioned at a third region. In this case, the region comprising regions $A_{26}$ to $A_{29}$ is the third region 41C.

As described above, twenty prisms 60 are disposed within each region $A_1$ to $A_{29}$. When the width of each region $A_1$ to $A_{29}$ is about 1000 μm, the prisms 60 within the regions $A_1$ to $A_5$ and the regions $A_{26}$ to $A_{29}$ function as first-type prisms 61, while the prisms within the regions $A_6$ to $A_{25}$ function as second-type prisms 62.

To manufacture the optical path deflecting plate 70 using the calculation results given in Table 1, the angle $\beta_1$ is used as the inclination angle of the inclined surface that connects the region $A_0$ above the light source 31 and the prism 60, within the region $A_1$, that is adjacent to the region $A_0$ as illustrated in Fig. 11. For $\alpha_{30}$, $\beta_{30}$, by contrast, the angle $\alpha_{30}$ and not $\beta_{30}$ is used as the inclination angle of the inclined surface that connects the region $A_0$ above the light source 32 and the prism 60, within the region $A_{29}$, that is adjacent to the region $A_0$.

In the optical path deflecting plate 70 having the above constitution, light F1, F2 outputted from two adjacent light sources 31, 32, among plural light sources 30, is incident on the regions $A_0$ to $A_{29}$ between and above two adjacent light sources 31,32.

Light F1, F2 from the light sources 31, 32 can easily be oriented in the direction of the normal line N, and be made incident on the region $A_0$ directly above the light source 31 and the region $A_0$ directly above the light source 32. Since the rear surface 40a at each region $A_0$ has a planar surface, light F1, F2 striking the respective regions $A_0$ issues from the exit surface 40b in the direction of the normal line N of the optical path deflecting plate 40.

The regions $A_1$ to $A_5$, $A_6$ to $A_{25}$ and $A_{26}$ to $A_{29}$ correspond respectively to the above-described first to third regions 41 A to 41C, where the first-type prisms 61 and second-type prisms 62 are disposed. The first- and second-type prisms 61, 62 are such that light F1, F2 from the light sources 31, 32 exit both in the direction of the normal line N. Hence, the orientations of light F1, F2 striking the portion comprising the regions $A_1$ to $A_{29}$ are changed into the direction of the normal line N. As was the case of the optical path deflecting plate 40, therefore, light F exits from the optical path deflecting plate 70 oriented in the direction of the normal line N, across substantially the entire exit surface 70b. The brightness of the light F issuing from the optical path deflecting plate 70 is made uniform as a result, while brightness is further enhanced as there is less light issuing at a tilt relative to the direction of the normal line N.

In the optical path deflecting plate 70 there are disposed 20 prisms 60 within each region $A_1$ to $A_{29}$, and hence the number of prisms 60 provided in the optical path deflecting plate 70 can be increased. The orientation of light F is changed at each prism 60, and thus the orientation of light F can be aligned in the direction of the normal line N more easily by way of the optical path deflecting plate 70. The disposed prisms 60 have identical cross-sectional shapes in each region $A_1$ to $A_{29}$, and hence the prisms 60 in each region $A_1$ to $A_{29}$ can be manufactured under identical conditions even when increasing thus the number of prisms 60. This allows, as a result, shortening the time required for manufacturing the optical path deflecting plate 70 vis-à-vis a case where the manufacture of a same number of prisms 60 involves specifying individual cross-sectional shapes for adjacent prisms 60.

When using the surface light source device 50 comprising the above optical path deflecting plate 70 in the transmissive image display device 1 illustrated in Fig. 1, uniform high-brightness light F strikes the transmissive image display section 10, making it possible, as a result, to display sharper images of uniform brightness, across an entire screen, in the transmissive image display device 1.

(Second example)

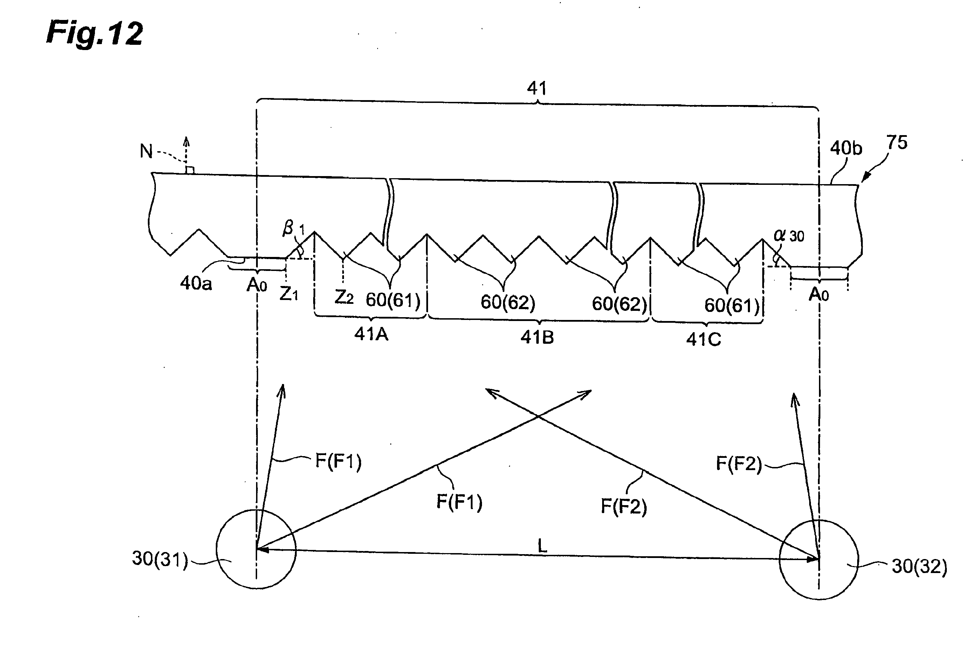

Fig. 12 is a schematic diagram illustrating the constitution of an optical path deflecting plate of a second example. An optical path deflecting plate 75 is used in the surface light source device 50 in place of the optical path deflecting plate 40 illustrated in Fig. 1. Fig. 12 illustrates an enlarged portion of the optical path deflecting plate 75 of the second example. Fig. 12 illustrates also two adjacent light sources 30, 30, among the plural light sources 30 of the surface light source device 50. The plural light sources 30 in the surface light source device 50 are all fluorescent lamps. The spacing L between two adjacent light sources 30, 30, among the plural light sources 30, is 30 mm. As was the case in the above-described embodiment, to differentiate the two light sources 30, 30, the latter will be referred to as light sources 31, 32 in the explanation that follows.

Like the optical path deflecting plate 70, the optical path deflecting plate 75 has regions $A_0$ above respective light sources 31, 32. The optical path deflecting plate 75 differs mainly from the optical path deflecting plate 70 of the first example in that now there are formed 28 prisms 60 between a region $A_0$ above the light source 31 and a region $A_0$ above the light source 32, with a spacing between prism apexes of 1000 $\mu$m. In other words, the optical path deflecting plate 75 differs from the optical path deflecting plate 70 in that the prisms 60 are formed having prism apexes at the boundary positions $z_i$ of adjacent regions $A_{i-1}$, $A_i$ in the optical path deflecting plate 70.

The inclination angles $\alpha_m, \beta_m$ (m=2 to 29) of each prism 60 are calculated by combining equations (3) to (14), to yield results identical to those of the first example given in Table 1. The angles $\alpha_1$, $\beta_1$ in Table 1 are inclination angles for a hypothetical case where there is a prism having an apex positioned at a position $z_1$=0.5 mm. Angles $\alpha_{30}$, $\beta_{30}$ are the reverse of $\alpha_1$, $\beta_1$. For manufacturing the optical path deflecting plate 75, the value of $\beta_1$ is used as the inclination angle of the inclined surface that connects the region $A_0$ above the light source 31, and the prism 60 that is adjacent to the region $A_0$, and the value of $\alpha_1$ is not used, as illustrated in Fig. 12. By contrast, the angle $\alpha_{30}$ and not $\beta_{30}$ is used as the inclination angle of the inclined surface that connects the region $A_0$ above the light source 32 and the prism 60 that is adjacent to the region $A_0$ on the side of the light source 31.

In the optical path deflecting plate 75 of the second example, the prisms 60 having inclination angles $\alpha_m$, $\beta_m$ for m=2 to 5 as the inclination angles, are first-type prisms 61 positioned at a first region 41A. The prisms 60 having $\alpha_m$, $\beta_m$ for m=6 to 25 as the inclination angles are second-type prisms 62 positioned at a second region 41B. The prisms 60 having $\alpha_m$, $\beta_m$ for m=26 to 29 as the inclination angles are first-type prisms 61 positioned at a third region.

The optical path deflecting plate 75 having the above constitution has two regions $A_0$, $A_0$ above the light sources 31, 32, respectively. As explained in the first example, light F1, F2 outputted from the region $A_0$ above the light source 31 and the region $A_0$ above the light source 32 exits in the direction of the normal line N. As described above, first-type prisms 61 and second-type prisms 62 are disposed at the regions between the two regions $A_0$ and $A_0$, and hence the orientations of light F1, F2 from the two adjacent light sources 31, 32 can both be changed into the direction of the normal line N, as is the case in the optical path deflecting plate 40 illustrated in Fig. 1. As a result, light F exits oriented in the direction of the normal line N, across substantially the entire exit surface 40b, which allows ensuring a uniform high brightness. Uniform high-brightness light F exits thereby from the surface light source device 50 using the optical path deflecting plate 75. Employing the surface light source device 50 in the transmissive image display device 1 makes it thus possible to display sharper images, of uniform brightness, across an entire screen.

The embodiment and examples of the optical path deflecting plate, surface light source device and transmissive image display device of the present invention as explained above are not meant to limit the invention in any way. For instance, equations including the correction terms $\Delta z^{\alpha}_m$, $\Delta H^{\alpha}_m$, $\Delta z^{\beta}_m$, $\Delta H^{\beta}_m$ are used for determining the inclination angles $\alpha_m$, $\beta_m$. However, when the pitch 1 between two adjacent prisms 60 is small enough relative to H and L, for instance no greater than about 1/10, the above correction terms need not be used.

Specifically, the following equations (15) to (18) may be used for calculating the inclination angles $\alpha$, $\beta$ of the first-type prisms 61.

[Equation 15]

$$\sin(\beta_m + \theta_m) = n \cdot \sin \beta_m \cdots (15)$$

[Equation 16]

$$\tan\theta_m = \frac{z_m}{H} \cdots (16)$$

[Equation 17]

$$\sin(\beta_m - \xi_m) = n\sin(2\alpha_m + \beta_m - \pi) \cdots (17)$$

[Equation 18]

$$\tan\xi_m = \frac{L - z_m}{H} \cdots (18)$$

The following equations (19) to (22) may be used for calculating the inclination angles $\alpha$, $\beta$ of the second-type prisms 62.

[Equation 19]

$$\sin(\beta_m - \xi_m) = n\sin(2\alpha_m + \beta_m - \pi) \cdots (19)$$

[Equation 20]

$$\tan\xi_m = \frac{L - z_m}{H} \cdots (20)$$

[Equation 21]

$$\sin(\alpha_m - \theta_m) = n\sin(\alpha_m + 2\beta_m - \pi) \cdots (21)$$

[Equation 22]

$$\tan\theta_m = \frac{z_m}{H} \cdots (22)$$

Although in the explanation thus far the prisms 60 are formed by milling of the rear surface 40a, the prisms 60 may also, for instance, be molded integrally into the rear surface 40a. In one corresponding region 41 there may be provided one second-type prism 62, and one first-type prism 61 each at both sides of the second-type prism 62, depending on the length thereof in the width direction of the corresponding region 41. Also, the surface light source device 50 has been exemplified as being used in the transmissive image display device 1. However, the use of the surface light source device 50 is not limited to the transmissive image display device 1. Equally, the use of the optical path deflecting plates 40, 70, 75 is not limited to the surface light source device 50.

**Claims**

1. An optical path deflecting plate disposed separated from a plurality of light sources that are arrayed spaced apart from each other, for changing an orientation of light from said plurality of light sources and outputting the light, comprising:

   a main surface on which light from said plurality of light sources is incident; and
   a planar exit surface which is disposed opposite said main surface, and from which there exits light from said plurality of light sources that is incident through said main surface;

   wherein said main surface comprises a plurality of prisms provided in each region of said main surface that corresponds to a region between two adjacent said light sources,
   said each corresponding region has first to third regions in an array direction of said plurality of light sources,
   at least one first prism, among said plurality of prisms, is disposed at said first and third regions,
   at least one second prism, among said plurality of prisms, is disposed at said second region,
   said first prism changes the orientation of light from the light source that is closer to the first prism, among said two adjacent light sources, into a normal line direction of said exit surface, through refraction upon incidence on the first prism, and changes the orientation of light from the light source that is farther from the first prism, among said two adjacent light sources, into said normal line direction, through total reflection in the first prism, and
   said second prism changes the orientation of light from said two adjacent light sources into said normal line direction through total reflection in the second prism.

2. The optical path deflecting plate according to claim 1,
   wherein first and second inclination angles, formed by said exit surface and first and second inclined surfaces constituting said first prism, are specified in such a manner that said first inclined surface refracts light from the light source that is closer to the first prism, among said two adjacent light sources, into said normal line direction, said first inclined surface refracts light from the light source that is farther from the first prism, among said two adjacent light sources, towards said second inclined surface, and said second inclined surface totally reflects the refracted light into said normal line direction,
   and wherein third and fourth inclination angles, formed by said exit surface and third and fourth inclined surfaces constituting said second prism, are specified in such a manner that said third inclined surface refracts light from the light source on the side of the third inclined surface, among said two adjacent light sources, towards said fourth inclined surface, said fourth inclined surface totally reflects the refracted light into said normal line direction, said fourth inclined surface refracts light from the light source on the side of the fourth inclined surface, among said two adjacent light sources, towards said third inclined surface, and said third inclined surface totally reflects the refracted light into said normal line direction.

3. The optical path deflecting plate according to claim 1 or 2, wherein said plurality of prisms provided in said corresponding region is symmetrical with respect to a plane perpendicular to said exit surface, at a central position between said two adjacent light sources.

4. The optical path deflecting plate according to any one of claims 1 to 3,
   wherein said first to third regions each have a plurality of unit regions,
   a plurality of said first prisms of identical cross-sectional shape is provided at each of said plurality of unit regions of said first and third regions, and
   a plurality of said second prisms of identical cross-sectional shape is provided at each of said plurality of unit regions of said second region.

5. A surface light source device, comprising:

   a plurality of light sources arrayed spaced apart from each other; and
   the optical path deflecting plate according to any one of claims 1 to 4, disposed separated from said plurality of light sources.

**6.** A transmissive image display device, comprising:

the surface light source device according to claim 5; and
a transmissive image display section disposed separated from said surface light source device, relative to an exit direction of light from said surface light source device.

Fig.1

# Fig.2

EP 2 006 731 A1

# *Fig.3*

# Fig.4

# *Fig.5*

*Fig.6*

EP 2 006 731 A1

# Fig.7

# Fig.8

Fig.9

# Fig.10

EP 2 006 731 A1

EP 2 006 731 A1

**Fig.11**

## Fig.12

EP 2 006 731 A1

**European Patent Office**

**EUROPEAN SEARCH REPORT**

Application Number

EP 08 07 5556

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 352611 A (SHARP KK) 6 December 2002 (2002-12-06) * paragraphs [0057] - [0069]; figures 1,3b,4-7 * * paragraphs [0084] - [0090]; figures 11,12 * * paragraphs [0094] - [0102]; figure 15 * ----- | 1-6 | INV. G02F1/13357 G02B5/04 |
| | | | TECHNICAL FIELDS SEARCHED (IPC) |
| | | | G02F G02B |

The present search report has been drawn up for all claims

| Place of search | Date of completion of the search | Examiner |
|---|---|---|
| Berlin | 23 September 2008 | Ciarrocca, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 006 731 A1

## ANNEX TO THE EUROPEAN SEARCH REPORT
## ON EUROPEAN PATENT APPLICATION NO.

EP 08 07 5556

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2008

| Patent document cited in search report | Publication date | Patent family member(s) | Publication date |
|---|---|---|---|
| JP 2002352611 A | 06-12-2002 | NONE | |

## REFERENCES CITED IN THE DESCRIPTION

**Patent documents cited in the description**

- JP H07141908 B